# EUROPEAN PATENT APPLICATION

(11) **EP 4 439 814 A1**
(43) Date of publication of application: **02.10.2024**
(21) Application number: 24154072.3
(22) Date of filing: 26.01.2024
(51) Int. Cl.: H01M 50/166, H01M 50/183, H01M 50/553, H01M 50/10

(54) **SECONDARY BATTERY**

(30) Priority: 31.03.2023 KR 20230042695
(71) Applicant: Samsung SDI Co., Ltd., Yongin-si, Gyeonggi-do 17084 (KR)
(72) Inventor: Kim, Jung Soo, 17084 Yongin-si, Gyeonggi-do (KR); Yong, Jun Sun, 17084 Yongin-si, Gyeonggi-do (KR); Lee, Jun Hyung, 17084 Yongin-si, Gyeonggi-do (KR); Bae, Kwang Soo, 17084 Yongin-si, Gyeonggi-do (KR)
(74) Representative: Gulde & Partner

(57) **Abstract**

A secondary battery includes: an electrode assembly including a first electrode plate, a second electrode plate, and a separator; a case accommodating the electrode assembly; a cap plate coupled to the case and having a terminal hole passing therethrough; a terminal over the terminal hole in the cap plate; a current collecting member electrically connecting the electrode plate and the terminal; and an insulating member insulating the cap plate and the terminal from each other and insulating the cap plate and the current collecting member from each other. At least one of a surface of the cap plate contacting the insulating member and a surface of the terminal contacting the insulating member has an unevenness formed thereon.

## Description

### BACKGROUND

### 1. Field

Aspects of embodiments of the present disclosure relate to a secondary battery.

### 2. Description of the Related Art

Unlike a primary battery that is not designed to be charged, a secondary battery is a battery that is designed to be (re)charged and discharged. Low-capacity batteries are used in portable small electronic devices, such as cellular phones and camcorders, while large-capacity batteries are widely used as power sources for driving motors in hybrid vehicles, electric vehicles, etc. Secondary batteries can be classified as cylindrical, prismatic, pouch-shaped (or polymer-type), etc. according to their external appearance.

A secondary battery may become inoperable due to a short circuit when a part having a negative polarity and a part having a positive polarity come into contact with each other. Thus, to insulate the negative polarity parts and the positive polarity parts of a secondary battery from each other, various insulating members are placed at various positions.

The above information disclosed in this Background section is for enhancement of understanding of the background of the present disclosure, and therefore, it may contain information that does not constitute prior art.

### SUMMARY

The present invention is set out in the appended set of claims, wherein the drawings and respective description relate to advantageous embodiments thereof. The present invention provides a secondary battery exhibiting improving adhesion to an insulating member integrally formed with a cap plate and a terminal through an insert injection process.

A secondary battery, according to a first aspect of the present disclosure, includes: an electrode assembly including a first electrode plate, a second electrode plate, and a separator; a case accommodating the electrode assembly; a cap plate coupled to the case and having a terminal hole passing therethrough; a terminal over the terminal hole in the cap plate; a current collecting member electrically connecting the electrode assembly and the terminal; and an insulating member insulating the cap plate and the terminal from each other and insulating the cap plate and the current collecting member from each other. At least one of a surface of the cap plate contacting the insulating member and a surface of the terminal contacting the insulating member has an unevenness formed thereon.

The insulating member may be integrally formed with the cap plate and the terminal through an insert injection process.

At least one of the surface of the cap plate contacting the insulating member and the surface of the terminal contacting the insulating member may have nano-anchors formed thereon and may be on a smaller scale than the unevenness.

The nano-anchors may be treated at a level of several nanometers to several tens of nanometers are formed on a surface of the terminal that contacts the insulating member.

The cap plate may have a coupling hole passing therethrough and may be arranged around the terminal hole. The insulating member may have a first portion insulating the cap plate and the terminal from each other above the cap plate, a second portion insulating the cap plate and the current collecting member from each other below the cap plate, and a third portion filled in the coupling hole and connecting the first portion and the second portion to each other.

The case may be formed in a rectangular parallelepiped shape. In addition, the case may be formed in a rectangular parallelepiped shape and the cap plate may be formed in the shape of a rectangular parallelepiped corresponding thereto.

The unevennesses may be grooves or protrusions in the surface of the cap plate contacting the insulating member.

The unevennesses may be grooves in the surface of the cap plate contacting the insulating member.

The unevennesses may be grooves in the surface of the terminal contacting the insulating member.

The unevennesses may be grooves in the surface of the cap plate contacting the insulating member and the surface of the terminal contacting the insulating member.

The unevennesses may have a shape of a hexahedron or a cylinder.

When the unevennesses are formed in the shape of the hexahedron, the horizontal and vertical lengths thereof may be in a range of 500 µm to 2 mm.

When the unevennesses are formed in the shape of a cylinder, the unevennesses may have a diameter in a range of 500 µm to 2 mm.

The case may have a pipe shape having both ends open. The cap plate may include a first cap plate and a second cap plate. The first cap plate may be coupled to one end of the case, and the second cap plate may be coupled to the other end of the case. The terminal may include a first terminal and a second terminal. The first terminal may be on a side of the first cap plate, and the second terminal may be on a side of the second cap plate. The current collecting member may include a first current collecting member and a second current collecting member. The first current collecting member may electrically connect the first electrode plate and the first terminal, and the second current collecting member may electrically connect the second electrode plate and the second terminal. The insulating member may include a first insulating member and a second insulating member. The first insulating member may insulate the first cap plate and the first terminal from each other and the first cap plate and the first current collecting member from each other, and the second insulating member may insulate the second cap plate and the second terminal from each other and the second cap plate and the second current collecting member from each other. The unevennesses may be formed on at least one of a surface of the first cap plate contacting the first insulating member, a surface of the first terminal contacting the first insulating member, a surface of the second terminal contacting the second insulating member, and a surface of the second terminal contacting the second insulating member.

### BRIEF DESCRIPTION OF DRAWINGS

FIG. 1 is a cross-sectional view of a secondary battery according to an embodiment of the present disclosure.
FIG. 2 is an enlarged view of the part II in FIG. 1.
FIG. 3 is a lower-side perspective view of a cap plate of a secondary battery according to an embodiment of the present disclosure.
FIG. 4 is an upper-side perspective view of an insulating member of a secondary battery according to an embodiment of the present disclosure.
FIG. 5 is an enlarged view of the part II in FIG. 1 according to another embodiment of the present disclosure.
FIG. 6 is an enlarged view of the part II in FIG. 1 according to another embodiment of the present disclosure.

### DETAILED DESCRIPTION

Hereinafter, embodiments of the present disclosure will be described, in detail, with reference to the accompanying drawings. Examples of the present disclosure are provided to more completely explain aspects and features of the present disclosure to those skilled in the art, and the following examples may be modified to have various other forms. The present disclosure may be embodied in many different forms and should not be construed as being limited to the example embodiments set forth herein. Rather, these embodiments are provided so that this disclosure will be thorough and complete and will fully convey the aspects and features of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

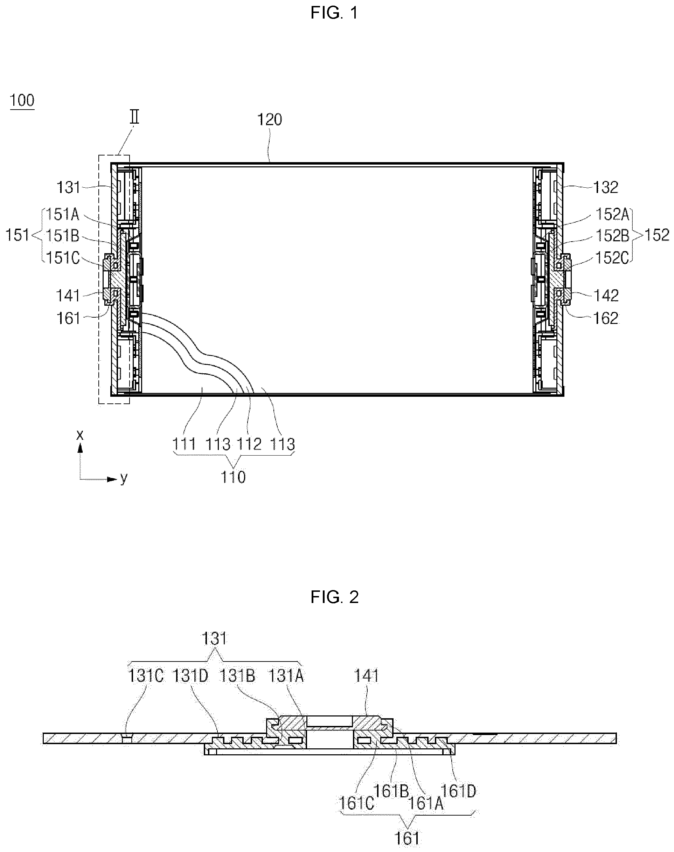

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof. FIG. 1 is a cross-sectional view of a secondary battery 100 according to an embodiment of the present disclosure, and FIG. 2 is an enlarged view of the part II in FIG. 1 showing a first cap plate 131, a first terminal 141, and a first insulating member 161. For reference, in the secondary battery 100, according to an embodiment of the present disclosure, the second cap plate 132, the second terminal 142, and the second insulating member 162 have substantially the same structure as the first cap plate 131, the first terminal 141, and the first insulating member 161. Therefore, in FIG. 2, when the reference symbols 131, 141, and 161 are changed to 132, 142, and 162, respectively, this indicates a coupling relationship between each of the second cap plate 132, the second terminal 142, and the second insulating members 162.

Referring to FIGS. 1 and 2, the secondary battery 100, according to an embodiment of the present disclosure, may include an electrode assembly 110, a case 120, a first cap plate 131, a first terminal 141, a first current collecting member 151, a first insulating member 161, a second cap plate 132, a second terminal 142, a second current collecting member 152, and a second insulating member 162.

The electrode assembly 110 includes a first electrode plate 111, a second electrode plate 112, and a separator 113.

The first electrode plate 111 may be any one of a negative electrode plate and a positive electrode plate. When the first electrode plate 111 is a negative electrode plate, the first electrode plate 111 may include a negative electrode current collector plate made of a thin conductive metal plate, such as copper or nickel foil or mesh. The negative electrode current collector plate may have a negative electrode coated portion at where a negative electrode active material is coated and a negative electrode uncoated portion at where the negative electrode active material is not coated. The negative electrode active material may include, for example, a carbon-based material, silicon (Si), tin (Sn), tin oxide, tin alloy composite, a transition metal oxide, lithium metal nitrite, or a metal oxide.

The second electrode plate 112 may be the other one of a negative electrode plate and a positive electrode plate. As described above, when the first electrode plate 111 is a negative electrode plate, the second electrode plate 112 is a positive electrode plate. In such an embodiment, the second electrode plate 112 may include a positive electrode current collector plate made of a conductive metal thin plate, such as aluminum foil or mesh. The positive electrode current collector plate may have a positive electrode coated portion at where a positive electrode active material is coated and a positive electrode uncoated portion at where a positive electrode active material is not coated. The positive electrode active material may include a chalcogenide compound, for example, a complex metal oxide, such as such as LiCoO₂, LiMn₂O₄, LiNiO₂, or LiNiMnOz.

The separator 113 is interposed between the first electrode plate 111 and the second electrode plate 112 to prevent a short circuit between the first electrode plate 111 and the second electrode plate 112. The separator 113 may be made of, for example, polyethylene, polypropylene, or a porous copolymer of polyethylene and polypropylene.

In the electrode assembly 110, the first electrode plate 111, the second electrode plate 112, and the separator 113 are formed to extend in (e.g., to primarily extend in) one direction. The electrode assembly 110 may be formed by winding the first electrode plate 111, the separator 113, the second electrode plate 112 together after being stacked in that order, which is referred to as a so-called "winding type" electrode assembly. Alternatively, the electrode assembly 110 may be formed by repeatedly stacking the first electrode plate 111, the separator 113, the second electrode plate 112, and the separator 113, in that order, each of which are formed in a shape corresponding to the desired shape of the electrode assembly 110, for example, in a rectangular shape. This is referred to as a so-called "stacking type" electrode assembly.

The case 120 has opposite open ends and is formed in the shape of a pipe (e.g., a rectangular pipe) having a space therein to accommodate the electrode assembly 110.

In the present disclosure, the case 120 is primarily described as being formed in a rectangular parallelepiped shape, but the case 120 does not necessarily have to be formed in a rectangular parallelepiped shape and may be formed in a cylindrical shape or the like. According to one embodiment the case 120 may be formed in a rectangular parallelepiped shape or may be formed in a cylindrical shape, preferably the case 120 is formed in a rectangular parallelepiped shape.

When the case 120 is prepared in a plate shape, for example, when the case 120 is formed in the shape of a rectangular parallelepiped, the case 120 may be formed by bending a sheet to form the rectangular parallelepiped shape and welding the corners (or the seam) thereof together. In another embodiment, the case 120 may be integrally and seamlessly formed as a whole through, for example, an extrusion process.

The case 120 may have a safety vent formed on one side thereof. When gas is generated inside the case 120 due to an abnormal operation (or abnormal reaction), the safety vent prevents an explosion by automatically fracturing (e.g., by bursting) due to the pressure to release the gas. Considering that, when the secondary battery 10 is designed in a rectangular parallelepiped shape, the relatively wide sides of a rectangular parallelepiped are generally arranged to face each other when assembled into a battery module or battery pack, the case 120 may have a safety vent formed on a relatively narrow side of the rectangular parallelepiped so that the gas can be more smoothly released. In a preferred embodiment, the secondary battery 10 is designed in a rectangular parallelepiped shape and the case 120 may have a safety vent formed on a relatively narrow side of the rectangular parallelepiped.

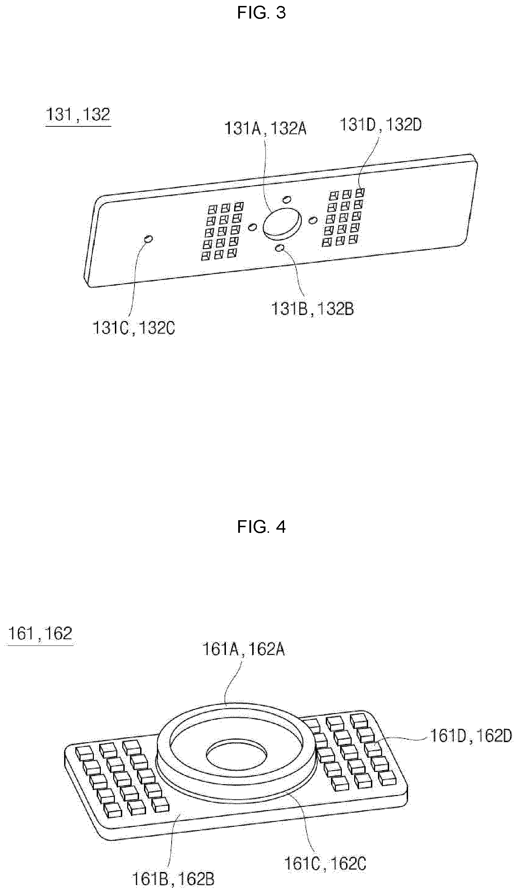

FIG. 3 is a lower-side perspective view of the cap plate of the secondary battery 100 according to an embodiment of the present disclosure.

The secondary battery 100, according to an embodiment of the present disclosure, includes the first cap plate 131 and the second cap plate 132 as cap plates, which have substantially the same structure. Thus, the first cap plate 131 and the second cap plate 132 will be described by referring to a common drawing. Therefore, it should be understood that, in FIG. 3, reference symbols 131, 131A, 131B, 131C, 131D, etc. indicate the first cap plate 131 and sub-components thereof, and reference symbols 132, 132A, 132B, 132C, 131D, etc. indicate the second cap plate 132 and sub-components thereof.

Referring to FIGS. 1-3, the first cap plate 131 is coupled to one end of the case 120. As described above, when the case 120 is formed in the shape of a rectangular parallelepiped, the first cap plate 131 is formed in the shape of a rectangular parallelepiped corresponding thereto. In a preferred embodiment, the case 120 is formed in the shape of a rectangular parallelepiped and the cap plate is formed in the shape of a rectangular parallelepiped corresponding thereto.

The first cap plate 131 has a first terminal hole (e.g., a first terminal opening) 131A, a first coupling hole (e.g., a first coupling opening) 131B, and a first injection hole (e.g., a first injection opening) 131C passing therethrough.

The first terminal hole 131A is for installing (e.g., mounting) the first terminal 141. Although the first terminal hole 131A is illustrated as being formed in the central portion of the first cap plate 131, the present disclosure is not limited thereto.

As will be described in more detail later, when the first insulating member 161 is made by an insert injection molding process, an injection material is filled in the first coupling hole 131B so that a portion 161A of the first insulating member 161 located above the first cap plate 131, that is, on the outer surface of the first cap plate 131, and a portion 161B located below the first cap plate 131, that is, on the inner surface of the first cap plate 131, are integrally connected. Thus, the first coupling hole 131B allows the first insulating member 161 to be securely, fixedly coupled to the first cap plate 131. The first coupling hole 131B may have a plurality of first coupling holes formed around the first terminal hole 131A and arranged along the periphery of the first terminal hole 131A. In the drawings, four first coupling holes 131B are illustrated as being arranged at equal intervals along (or around) the periphery of the first terminal hole 131A.

The first injection hole 131C is for injecting an electrolyte into the case 120 after the electrode assembly 110 is inserted into the case 120 and both ends of the case 120 are then closed by the first cap plate 131 and the second cap plate 132. After the electrolyte is injected, the first injection hole 131C may be closed (e.g., sealed) by a separate stopper member.

As described above, the first insulating member 161 is integrally manufactured with the first cap plate 131 by an insert injection molding process. To improve adhesion between the first cap plate 131 and the first insulating member 161, nano-anchors treated at a level of several nanometers to several tens of nanometers (for example, 10 nm to 100 nm) are formed on a surface of the first cap plate 131 that contacts the first insulating member 161. However, because the nano-anchors are extremely small, the nano-anchors are not represented in the drawings.

To further improve adhesion between the first cap plate 131 and the first insulating member 161, unevennesses (e.g., a roughness or ridges) are formed on a larger scale than the nano-anchors on the surface of the first cap plate 131 that contacts the first insulating member 161. In the drawings, the first insulating member 161 is illustrated as contacting the lower surface of the first cap plate 131 over a relatively wide area. In such an embodiment, unevennesses may be primarily formed on the lower surface of the first cap plate 131. In addition, in the drawings, the unevennesses are illustrated as being formed by grooves 131D in the lower surface of the first cap plate 131. However, unevennesses may also be formed by protrusions on the lower surface of the first cap plate 131, but grooves 131D may be easier to manufacture because the grooves 131D can be easily manufactured through press-fitting. According to one embodiment, unevennesses may be formed by grooves or protrusions, preferably grooves, in the surface of the cap plate contacting the insulating member. The unevennesses, that is, the grooves 131D, may be formed in, for example, a regular hexahedron or a cylinder shape to ensure maximum adhesion. In addition, the grooves 131D may have horizontal and vertical lengths or diameters in a range of, for example, about 500 µm to about 2 mm, respectively. In the drawings, 15 (3*5) grooves 131D are illustrated on opposite sides of the first terminal hole 131A, but the number and arrangement thereof may be changed without limit.

The first terminal 141 is disposed on the first terminal hole 131A of the first cap plate 131 and provides a connection to an external device as a negative electrode, for example.

The first current collecting member 151 electrically connects the first electrode plate 111 of the electrode assembly 110 and the first terminal 141.

In the drawings, the first current collecting member 151 is illustrated as including a first electrode plate connection part 151A and a first terminal connection part 151B.

The first electrode plate connection part 151A is electrically connected to the first electrode plate 111 of the electrode assembly 110. In the drawings, it is illustrated that both edges of the first electrode plate connection part 151A are welded to the first electrode plate 111 of the electrode assembly 110, respectively, and the central portion thereof protrudes convexly outwardly to be welded to the first terminal connection part 151B.

The first terminal connection part 151B is electrically connected to the first terminal 141. In the drawings, it is illustrated that the first terminal connection part 151B is formed in a plate shape overall, the first electrode plate connecting part 151A is welded on the lower surface, and a protrusion 151C is formed on the upper surface of the first terminal connection part 151B to pass through the first terminal hole 131A of the first cap plate 131.

FIG. 4 is an upper-side perspective view of an insulating member of the secondary battery 100 according to an embodiment of the present disclosure.

The secondary battery 100, according to an embodiment of the present disclosure, includes a first insulating member 161 and a second insulating member 162 as insulating members, which have substantially the same structure. Thus, a description of the first insulating member 161 and the second insulating member 162 will be made by using a common drawing. Therefore, it should be understood that, in FIG. 4, reference symbols 161A, 161B, 161C, 161D, etc. indicate the first insulating member 161 and sub-components thereof, and reference symbols 162A, 162B, 162C, 162D, etc. indicate the second insulating member 162 and sub-components thereof.

Referring to FIG. 4 together with FIGS. 1-3, the first insulating member 161 is interposed between the first cap plate 131 and the first terminal 141 and between the first cap plate 131 and the first current collecting member 151 to insulate these components from each other.

The first insulating member 161 may be made of a non-conductive polymer material.

For example, the first insulating member 161 is integrally formed with the first cap plate 131 and the first terminal 141 by an insert injection process. For example, the first cap plate 131 and the first terminal 141 are disposed in a mold, and an injection material is injected to form the first insulating member 161 between the first cap plate 131 and the first terminal 141. Accordingly, the first insulating member 161 may include a portion 161A that insulates the first cap plate 131 and the first terminal 141 from each other above the first cap plate 131, a portion 161B that insulates the first cap plate 131 and the first current collecting member 151 from each other below the first cap plate 131, and a portion 161C that connects the portions 161A and 161B to each other through the first coupling hole 131B in the first cap plate 131.

As described above, nano-anchors are formed on a surface of the first cap plate 131 that contact the first insulating member 161, and thus, heterogeneous adhesion between metal and polymer can be increased. According to a preferred embodiment, at least one of the surface of the cap plate contacting the insulating member and the surface of the terminal contacting the insulating member has nano-anchors formed thereon and on a smaller scale than the unevenness.

However, because the nano-anchors have a very small scale at the level of nanometers, the interface between the first cap plate and the first insulating member may be considered to be substantially flat when viewed in terms of the entire secondary battery. Therefore, a condition (e.g., a minimum propagation path length) in which crack propagation can easily occur due to external stress may be created.

Accordingly, in the secondary battery 100, according to an embodiment of the present disclosure, by increasing the interface area between the first cap plate 131 and the first insulating member 161 by the unevennesses, a crack propagation path can be increased and adhesion between the first cap plate 131 and the first insulating member 161 can be further improved.

In the drawings, the unevennesses are shown as protrusions 161D in the first insulating member 161 because the unevennesses are implemented as the grooves 131D in the first cap plate 131. If the unevennesses are implemented as protrusions in the first cap plate 131, the unevennesses in the first insulating member 161 will be realized as grooves. Therefore, the protrusions 161D of the first insulating member 161 are formed in a shape, size, number, and arrangement corresponding to those of the grooves 131D in the first cap plate 131.

Referring back to FIGS. 1 and 3, the second cap plate 132 will now be described in more detail.

The second cap plate 132 is coupled to the other end of the case 120. As described above, when the case 120 is formed in the shape of a rectangular parallelepiped, the second cap plate 132 is formed in the shape of a rectangle corresponding thereto.

Similar to the first cap plate 131, the second cap plate 132 is has a second terminal hole (e.g., a second terminal opening) 132A, a second coupling hole 132B (e.g., a second coupling opening), and a second injection hole (e.g., a second injection opening) 132C passing therethrough.

The second terminal hole 132A is for installing (e.g., mounting) the second terminal 142. In the drawings, the second terminal hole 132A is illustrated as being formed in the central portion of the second cap plate 132, but it is not limited thereto.

As will be described in more detail later, when the second insulating member 162 is made by an insert injection molding process, an injection material is filled in the second coupling hole 132B so that a portion 162A of the second insulating member 162 located above the second cap plate 132, that is, on the outer surface of the second cap plate 132, and a portion 162B located below the second cap plate 132, that is, on the inner surface of the second cap plate 132, are integrally connected. Thus, the second coupling hole 132B allows the second insulating member 162 to be securely, fixedly coupled to the second cap plate 132. The second coupling hole 132B may have a plurality of second coupling holes formed around the second terminal hole 132A and arranged along the periphery of the second terminal hole 132A. In the drawings, it is illustrated that four second coupling holes 132B are arranged at equal intervals along the periphery of the second terminal hole 132A.

The second injection hole 132C is for injecting an electrolyte into the case 120 after the electrode assembly 110 is inserted into the case 120 and both ends of the case 120 are then closed by the first cap plate 131 and the second cap plate 132. After the electrolyte is injected, the second injection hole 132C may be closed by a separate stopper member.

As stated above, the second insulating member 162 is integrally manufactured with the second cap plate 132 by an insert injection molding process. To improve adhesion between the second cap plate 132 and the second insulating member 162, nano-anchors treated at a level of several nanometers to several tens of nanometers (for example, 10 nm to 100 nm) are formed on a surface of the second cap plate 132 that contacts the second insulating member 162. However, because the scales (e.g., sizes) of the nano-anchors are extremely small, the nano-anchors are not specifically represented in the drawings.

To further improve adhesion between the second cap plate 132 and the second insulating member 162, unevennesses are formed on a larger scale than the nano-anchors on the surface of the second cap plate 132 that contacts the second insulating member 162. In the drawings, the second insulating member 162 is illustrated as contacting the lower surface of the second cap plate 132 over a relatively wide area, and in such an embodiment, unevennesses may be primarily formed on the lower surface of the second cap plate 132. In addition, in the drawings, the unevennesses are illustrated as grooves 132D in the lower surface of the second cap plate 132. However, unevennesses may be formed as protrusions on the lower surface of the second cap plate 132, but the grooves 132D are easier to manufacture because the grooves 132D can be easily manufactured through press-fitting. The unevennesses, that is, the grooves 132D, may be formed in, for example, a regular hexahedron or a cylinder shape to ensure maximum adhesion. In addition, the grooves 132D may have horizontal and vertical lengths or diameters in a range of, for example, about 500 µm to about 2 mm, respectively. In the drawings, 15 (3*5) grooves 132D are illustrated on both sides of the second terminal hole 132A, but the number and arrangement may be changed.

The second terminal 142 is disposed on the second terminal hole 132A in the second cap plate 132 and provides a connection to an external device as a positive electrode, for example.

The second current collecting member 152 electrically connects the second electrode plate 112 of the electrode assembly 110 and the second terminal 142.

In the drawings, the second current collecting member 152 is illustrated as including a second electrode plate connection part 152A and a second terminal connection part 152B.

The second electrode plate connection part 152A is electrically connected to the first electrode plate 111 of the electrode assembly 110. In the drawings, it is illustrated that both edges of the second electrode plate connection part 152A are welded to the second electrode plate 112 of the electrode assembly 110, respectively, and the central portion thereof protrudes convexly outwardly to be welded to the second terminal connection part 152B.

The second terminal connection part 152B is electrically connected to the second terminal 142. In the drawings, the second terminal connection part 152B is formed in a plate shape overall, the second electrode plate connection part 152A is welded on the lower surface, and a protrusion 152C is formed on the upper surface to pass through the second terminal hole 132A in the second cap plate 132.

Referring now to FIGS. 1 and 4, the second insulating member 162 will be described. Similar to the first insulating member 161, the second insulating member 162 is interposed between the second cap plate 132 and the second terminal 142 and between the second cap plate 132 and the second current collecting member 152 insulate these components from each other.

The second insulating member 162 may be made of a non-conductive polymer material.

For example, the second insulating member 162 is integrally formed with the second cap plate 132 and the second terminal 142 by an insert injection process. For example, the second cap plate 132 and the second terminal 142 are disposed in a mold, and an injection material is injected to form the second insulating member 162 between the second cap plate 132 and the second terminal 142. Accordingly, the second insulating member 162 may include a portion 162A that insulates the second cap plate 132 and the first terminal 141 from each other above the second cap plate 132, a portion 162B that insulates the second cap plate 132 and the second current collecting member 152 from each other below the second cap plate 132, and a portion 161C that connects the portions 162A and 162B through the second coupling hole 132B in the second cap plate 132.

Here, nano-anchors are formed on a surface of the second cap plate 132 that contacts the second insulating member 162, and thus, heterogeneous adhesion between metal and polymer may be increased.

However, because the nano-anchors have a very small scale at the level of nanometers, it can be said that the interface between the second cap plate and the second insulating member is substantially flat when considered in terms of the entire secondary battery. Therefore, a condition (e.g., a minimum propagation path length) in which crack propagation can easily occur due to external stress may be created.

Accordingly, in the secondary battery 100, according to an embodiment of the present disclosure, by increasing the interface area between the second cap plate 132 and the second insulating member 162 by unevennesses, a crack propagation path can be increased and adhesion between the second cap plate 132 and the second insulating member 162 can be further improved.

In the drawings, the unevennesses are illustrated as protrusions 161D in the second insulating member 162 because the unevennesses are implemented as the grooves 132D in the second cap plate 132. However, when the unevennesses are implemented as protrusions on the second cap plate 132, the unevennesses in the second insulating member 162 would be grooves. Therefore, the protrusions 162D of the second insulating member 162 are formed in a shape, size, number, and arrangement corresponding to those of the grooves 132D in the second cap plate 132. Therefore, the protrusions 162D of the second insulating member 162 are formed in a shape, size, number, and arrangement corresponding to that of the grooves 132D in the second cap plate 132.

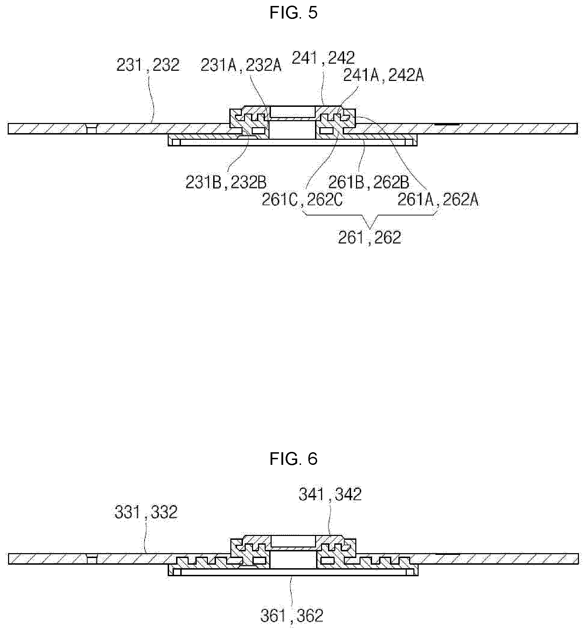

FIG. 5 shows a secondary battery according to another embodiment of the present disclosure corresponding to the view of FIG. 2.

The secondary battery 100, described above with reference to FIGS. 1 to 4, includes nano-anchors and unevennesses formed on the sides of the first and second cap plates 131 and 132 to improve adhesion between the first and second cap plates 131 and 132 and the first and second insulating members 161 and 162. In the secondary battery shown in FIG. 5, according to another embodiment of the present disclosure, nano-anchors and unevennesses are formed on the sides of the first and second terminals 241 and 242 to improve adhesion between the first and second terminal 241 and 242 and the first and second insulating member 261 and 262.

For reference, in the secondary battery shown in FIG. 5, the first cap plate 231, the first terminal 241, and the first insulating member 261 have substantially the same structure as the second cap plate 232, the second terminal 242, and the second insulating member 262 described above. Therefore, for convenience, the respective components will be described by using a single, common drawing, instead of separately drawn figures.

The first terminal 241 is disposed on the first terminal hole 231A in the first cap plate 231 to be connected to an external device as, for example, a negative electrode, and the second terminal 242 is disposed on the second terminal hole 232A to be connected to an external device as, for example, a positive electrode.

The first insulating member 261 is interposed between the first cap plate 231 and the first terminal 241 and between the first cap plate 231 and a first current collecting member insulate these components from each other.

The first insulating member 261 may be made of a non-conductive polymer material.

For example, the first insulating member 261 is integrally formed with the first cap plate 231 and the first terminal 241 by an insert injection process. For example, the first cap plate 231 and the first terminal 241 are disposed in a mold, and an injection material is injected to form the first insulating member 261 between the first cap plate 231 and the first terminal 241. Accordingly, the first insulating member 261 may include a portion 261A that insulates the first cap plate 231 and the first terminal 241 from each other above the first cap plate 231, a portion 261B that insulates the first cap plate 231 and the first current collecting member 251 from each other below the first cap plate 231, and a portion 261C that connects the portions 261A and 261B through the first coupling hole 231B in the first cap plate 231.

To improve adhesion between the first terminal 241 and the first insulating member 261, nano-anchors treated at a level of several nanometers to several tens of nanometers (for example, 10 nm to 100 nm) are formed on a surface of the first terminal 241 that contacts the first insulating member 261. However, because the scales of the nano-anchors are extremely small, the nano-anchors are not specifically represented in the drawings.

To further improve adhesion between the first terminal 241 and the first insulating member 261, unevennesses are formed on a larger scale than the nano-anchors on the surface of the first terminal 241 that contacts the first insulating member 261. In the drawings, the first insulating member 261 is illustrated as contacting the lower surface of the first terminal 241 over a relatively wide area, and in such an embodiment, unevennesses may be primarily formed on the lower surface of the first terminal 241. In addition, in the drawings, unevennesses are formed illustrated as grooves 241A in the lower surface of the first terminal 241. However, unevennesses may be formed as protrusions on the lower surface of the first terminal 241, but the grooves 241A are more easily manufactured because the grooves 241A can be easily manufactured through press-fitting. The unevennesses, that is, the grooves 241A, may be formed in, for example, a regular hexahedron or a cylinder shape to ensure maximum adhesion. In addition, the grooves 241A may be formed to have horizontal and vertical lengths or diameters in a range of, for example, about 500 µm to about 2 mm, respectively.

Accordingly, by increasing the interface area between the first terminal 241 and the first insulating member 261 by unevennesses, a crack propagation path can be increased and adhesion between the first terminal 241 and the first insulating member 261 can be further improved.

The same is true of the second insulating member 262.

For example, the second insulating member 262 is interposed between the second cap plate 232 and the second terminal 242 and between the second cap plate 232 and the second current collecting member insulate these components from each other.

The second insulating member 262 may be made of a non-conductive polymer material.

For example, the second insulating member 262 is integrally formed with the second cap plate 232 and the second terminal 242 by an insert injection process. For example, the second cap plate 232 and the second terminal 242 are disposed in a mold, and an injection material is injected to form the second insulating member 262 between the second cap plate 232 and the second terminal 242. Accordingly, the second insulating member 262 may include a portion 262A that insulates the second cap plate 232 and the second terminal 242 from each other above the second cap plate 232, a portion 262B that insulates the second cap plate 232 and the second current collecting member 252 from each other below the second cap plate 232, and a portion 261C that connects the portions 262A and 262B through the second coupling hole 232B in the second cap plate 232.

To improve adhesion between the second terminal 242 and the second insulating member 262, nano-anchors treated at a level of several nanometers to several tens of nanometers (for example, 10 nm to 100 nm) are formed on a surface of the second terminal 242 that contacts the second insulating member 262. According to a preferred embodiment, nano-anchors treated at a level of several nanometers to several tens of nanometers (for example, 10 nm to 100 nm) are formed on a surface of the terminal that contacts the insulating member. However, because the scales of the nano-anchors are extremely small, the nano-anchors are not specifically represented in the drawings.

To further improve the adhesion between the second terminal 242 and the second insulating member 262, unevennesses are formed on a larger scale than the nano-anchors on the surface of the second terminal 242 that contacts the second insulating member 262. In the drawings, the second insulating member 262 is illustrated as contacting the lower surface of the second terminal 242 over a relatively wide area, and in such an embodiment, unevennesses may be primarily formed on the lower surface of the second terminal 242. In addition, in the drawings, unevennesses are formed as grooves 242A in the lower surface of the second terminal 242. However, unevennesses may be formed as protrusions on the lower surface of the second terminal 242, but the grooves 242A are easier to manufacture because the grooves 242A can be easily manufactured through press-fitting. The unevennesses, that is, the grooves 242A, may be formed in, for example, a regular hexahedron or a cylinder shape to ensure maximum adhesion. In addition, the grooves 242A may be formed to have horizontal and vertical lengths or diameters in a range of, for example, about 500 µm to about 2 mm, respectively.

Accordingly, by increasing the interface area between the second terminal 242 and the second insulating member 262 by unevennesses, a crack propagation path can be increased and adhesion between the second terminal 242 and the second insulating member 262 can be further improved.

Features other than those in the secondary battery according to another embodiment described with reference to FIG. 5 are substantially the same as those of the secondary battery 100 described with reference to FIGS. 1 to 4, and if there is any difference therebetween, said difference is merely a matter which could be implemented by a person skilled in the art through a change. Thus, a repeated explanation thereof will be omitted.

FIG. 6 shows a secondary battery according to another embodiment of the present disclosure corresponding to FIG. 2.

A difference between the secondary battery 100 according to an embodiment of the present disclosure described above with reference to FIGS. 1 to 4, in which nano-anchors and unevennesses are formed on the sides of the first and second cap plates 131 and 132 to improve adhesion between the first and second cap plates 131 and 132 and the first and second insulating members 161 and 162, or the secondary battery according to another embodiment of the present disclosure described with reference to FIG. 5, in which nano-anchors and unevennesses are formed on the sides of the first and second terminals 241 and 242 to improve adhesion between the first and second terminals 241 and 242 and the first and second insulating members 261 and 262, the secondary battery according to another embodiment of the present disclosure to be described with reference to FIG. 6 has nano-anchors and unevennesses formed on both of first and second cap plates 331 and 332 and first and second terminals 341 and 342.

For reference, in the secondary battery according to another embodiment of the present disclosure shown in FIG. 6, the first cap plate 331, the first terminal 341, and the first insulating member 361 have substantially the same structure as the second cap plate 332, the second terminal 342, and the second insulating member 362. Therefore, for convenience, the respective components will be described by using a single, common drawing instead of separately drawn figures.

For example, the first insulating member 361 is integrally formed with the first cap plate 331 and the first terminal 341 by an insert injection process, and nano-anchors treated at a level of several nanometers to several tens of nanometers (for example, 10 nm to 100 nm) are formed on a surface of the first cap plate 331 that contacts the first insulating member 361 and a surface of the first terminal 341 that contacts the first insulating member 361.

In addition, unevennesses are formed on a larger scale than the nano-anchors on the surface of the first cap plate 331 that contacts the first insulating member 361 (in the drawing, the lower surface of the first cap plate 331) and the surface of the first terminal 341 that contacts the first insulating member 361 (in the drawing, the lower surface of the first terminal 341), respectively. The unevennesses may be formed in, for example, a regular hexahedron or a cylinder shape to ensure maximum adhesion. In addition, the unevennesses may be formed to have horizontal and vertical lengths or diameters in a range of, for example, about 500 µm to about 2 mm, respectively.

Accordingly, by increasing the interface areas between the first cap plate 331 and the first insulating member 361 and between the first terminal 341 and the first insulating member 361 by unevennesses, a crack propagation path can be increased and adhesion between the first cap plate 331 and the first insulating member 361 and adhesion between the first terminal 341 and the first insulating member 361 can be further improved.

Similarly, the second insulating member 362 is integrally formed with the second cap plate 332 and the second terminal 342 by an insert injection process, and nano-anchors treated at a level of several nanometers to several tens of nanometers (for example, 10 nm to 100 nm) are formed on a surface of the second cap plate 332 that contacts the second insulating member 362 and a surface of the second terminal 342 that contacts the second insulating member 362, respectively.

In addition, unevennesses are formed on a larger scale than the nano-anchors on the surface of the second cap plate 332 that contacts the second insulating member 362 (in the drawing, the lower surface of the second cap plate 332) and the surface of the second terminal 342 that contacts the second insulating member 362 (in the drawing, the lower surface of the second terminal 342), respectively. The unevennesses may be formed in, for example, a regular hexahedron or a cylinder shape to ensure maximum adhesion. In addition, the unevennesses may be formed to have horizontal and vertical lengths or diameters in a range of, for example, about 500 µm to about 2 mm, respectively.

Accordingly, by increasing the interface areas between the second cap plate 332 and the second insulating member 362 and between the second terminal 342 and the second insulating member 362 by unevennesses, a crack propagation path can be increased and adhesion between the second cap plate 332 and the second insulating member 362 and the adhesion between the second terminal 342 and the second insulating member 362 can be further improved.

As described above, in embodiments of the present disclosure, an insulating member is integrally formed with a cap plate and a terminal through an insert injection process, nano-anchors are formed on the cap plate and/or the terminal to improve adhesion therebetween, and unevennesses are further formed on a larger scale than the nano-anchors, thereby providing a secondary battery exhibiting improved adhesion by increasing the interface area between the cap plate and/or the terminal and the insulating member and increased crack propagation paths.

Aspects and features of the present disclosure other than those described herein will be apparent to those of ordinary skill in the art, and if there is any difference therebetween, said difference is merely a matter which could be implemented by a person skilled in the art through a change. Thus, a repeated explanation thereof will be omitted.

The foregoing embodiments are some embodiments for carrying out the secondary battery according to the present disclosure, and the present disclosure is not limited to these embodiments.

### List of reference signs

- 100: Secondary battery
- 110: Electrode assembly
- 111: First electrode plate
- 112: Second electrode plate
- 113: Separator
- 120: Case
- 131: First cap plate
- 131A: First terminal hole
- 131B: First coupling hole
- 131C: First injection hole
- 131D: Grooves
- 132: Second cap plate
- 132A: Second terminal hole
- 132B: Second coupling hole
- 132C: Second injection hole
- 132D: Grooves
- 141: First terminal
- 142: Second terminal
- 151: First current collecting member
- 151A: First electrode plate connection part
- 151B: First terminal connection part
- 151C: Protrusion
- 152: Second current collecting member
- 152A: Second electrode plate connection part
- 152B: Second terminal connection part
- 152C: Protrusion
- 161: First insulating member
- 161A: First portion
- 161B: Second portion
- 161C: Third portion
- 161D: Protrusions
- 162: Second insulating member
- 162A: First portion
- 162B: Second portion
- 162C: Third portion
- 162D: Protrusions
- 231: First cap plate
- 231A: First terminal hole
- 231B: First coupling hole
- 232: Second cap plate
- 232A: Second terminal hole
- 232B: Second coupling hole
- 241: First terminal
- 241A: Grooves
- 242: Second terminal
- 242A: Grooves
- 251: First current collecting member
- 252: Second current collecting member
- 261: First insulating member
- 261A: First portion
- 261B: Second portion
- 261C: Third portion
- 262: Second insulating member
- 262A: First portion
- 262B: Second portion
- 262C: Third portion
- 331: First cap plate
- 332: Second cap plate
- 341: First terminal
- 342: Second terminal
- 361: First insulating member
- 362: Second insulating member

## Claims

1. A secondary battery (100) comprising:
an electrode assembly (110) comprising a first electrode plate (111), a second electrode plate (112), and a separator (113);
a case (120) accommodating the electrode assembly (110);
a cap plate coupled to the case (120) and having a terminal hole passing therethrough;
a terminal over the terminal hole in the cap plate;
a current collecting member electrically connecting the electrode assembly (110) and the terminal; and
an insulating member insulating the cap plate and the terminal from each other and insulating the cap plate and the current collecting member from each other,
wherein at least one of a surface of the cap plate contacting the insulating member and a surface of the terminal contacting the insulating member has an unevenness formed thereon.

2. The secondary battery (100) of claim 1, wherein the insulating member is integrally formed with the cap plate and the terminal through an insert injection process.

3. The secondary battery (100) of claim 1 or 2, wherein at least one of the surface of the cap plate contacting the insulating member and the surface of the terminal contacting the insulating member has nano-anchors formed thereon and on a smaller scale than the unevenness.

4. The secondary battery (100) of any of claims 1 to 3, wherein nano-anchors treated at a level of several nanometers to several tens of nanometers are formed on a surface of the terminal that contacts the insulating member.

5. The secondary battery (100) of any of claims 1 to 4, wherein the cap plate has a coupling hole passing therethrough and arranged around the terminal hole, and
wherein the insulating member has a first portion (161A, 162A, 261A, 262A) insulating the cap plate and the terminal from each other above the cap plate, a second portion (161B, 162B, 261B, 262B) insulating the cap plate and the current collecting member from each other below the cap plate, and a third portion (161C, 162C, 261C, 262C) filled in the coupling hole and connecting the first portion (161A, 162A, 261A, 262A) and the second portion (161B, 162B, 261B, 262B) to each other.

6. The secondary battery (100) of any of claims 1 to 5, wherein the case (120) is formed in a rectangular parallelepiped shape.

7. The secondary battery (100) of claim 6, wherein the cap plate is formed in the shape of a rectangular parallelepiped corresponding thereto.

8. The secondary battery (100) of any of claims 1 to 7, wherein the unevennesses are grooves (131D, 132D, 241A, 242A) or protrusions in the surface of the cap plate contacting the insulating member.

9. The secondary battery (100) of any of claims 1 to 8, wherein the unevennesses are grooves (131D, 132D, 241A, 242A) in the surface of the cap plate contacting the insulating member.

10. The secondary battery (100) of any of claims 1 to 9, wherein the unevennesses are grooves (131D, 132D, 241A, 242A) in the surface of the terminal contacting the insulating member.

11. The secondary battery (100) of any of claims 1 to 10, wherein the unevennesses are grooves (131D, 132D, 241A, 242A) in the surface of the cap plate contacting the insulating member and the surface of the terminal contacting the insulating member.

12. The secondary battery (100) of any of claims 1 to 11, wherein the unevennesses have a shape of a hexahedron or a cylinder.

13. The secondary battery (100) of claim 12, wherein, when the unevennesses are formed in the shape of the hexahedron, horizontal and vertical lengths thereof are in a range of 500 µm to 2 mm.

14. The secondary battery (100) of claim 12, wherein, when the unevennesses are formed in the shape of a cylinder, the unevennesses have a diameter in a range of 500 µm to 2 mm.

15. The secondary battery (100) of any of claims 1 to 14, wherein the case (120) has a pipe shape having both ends open,
wherein the cap plate comprises a first cap plate (131, 231, 331) and a second cap plate (132, 232, 332), the first cap plate (131, 231, 331) being coupled to one end of the case (120), the second cap plate (132, 232, 332) being coupled to the other end of the case (120),
wherein the terminal comprises a first terminal (141, 241, 341) and a second terminal (142, 242, 342), the first terminal (141, 241, 341) being on a side of the first cap plate (131, 231, 331), the second terminal (142, 242, 342) being on a side of the second cap plate (132, 232, 332),
wherein the current collecting member comprises a first current collecting member (151, 251) and a second current collecting member (152, 252), the first current collecting member (151, 251) electrically connecting the first electrode plate (111) and the first terminal (141, 241, 341), the second current collecting member (152, 252) electrically connecting the second electrode plate (112) and the second terminal (142, 242, 342),
wherein the insulating member comprises a first insulating member (161, 261, 361) and a second insulating member (162, 262, 362), the first insulating member (161, 261, 361) insulating the first cap plate (131, 231, 331) and the first terminal (141, 241, 341) from each other and the first cap plate (131, 231, 331) and the first current collecting member (151, 251) from each other, the second insulating member (162, 262, 362) insulating the second cap plate (132, 232, 332) and the second terminal (142, 242, 342) from each other and the second cap plate (132, 232, 332) and the second current collecting member (152, 252) from each other, and
wherein the unevennesses are formed on at least one of a surface of the first cap plate (131, 231, 331) contacting the first insulating member (161, 261, 361), a surface of the first terminal (141, 241, 341) contacting the first insulating member (161, 261, 361), a surface of the second cap plate (132, 232, 332) contacting the second insulating member (162, 262, 362), and a surface of the second terminal (142, 242, 342) contacting the second insulating member (162, 262, 362).
